# EUROPÄISCHE PATENTSCHRIFT

(11) **EP 2 602 159 B1**
(45) Veröffentlichungstag und Bekanntmachung des Hinweises auf die Patenterteilung: **17.12.2014**
(21) Anmeldenummer: 12007317.6
(22) Anmeldetag: 23.10.2012
(51) Int. Cl.: B60R 19/00, B62D 49/04, E01C 19/48

(54) **Baumaschine, insbesondere Straßenfertiger oder Beschicker**
Construction machine, in particular paving machine or feeder
Machine de construction, notamment finisseuse de route ou dispositif d'alimentation

(30) Priorität: 06.12.2011 DE 102011120161
(43) Veröffentlichungstag der Anmeldung: 12.06.2013
(73) Patentinhaber: Dynapac GmbH, 26203 Wardenburg (DE)
(72) Erfinder: Schwarting, Thorsten, 26842 Ostrhauderfehn (DE); Schröder, Malte, 26203 Wardenburg (DE); Fasche, Christian, 27793 Wildeshausen (DE)
(74) Vertreter: Möller, Friedrich

(56) Entgegenhaltungen:
- EP-A1- 1 612 126
- CN-Y- 2 806 554
- US-A- 2 646 287

## Beschreibung

Die Erfindung betrifft eine Baumaschine, insbesondere Straßenfertiger oder Beschicker, gemäß dem Oberbegriff des Anspruchs 1.

Bei den hier angesprochenen Baumaschinen handelt es sich um solche, die von einem Transportmittel, beispielsweise einem Lastkraftwagen, mit Baumaterial versorgt werden. Solche Baumaschinen sind vor allem Straßenfertiger und Beschicker. Straßenfertiger dienen zur Herstellung von Straßenbelägen aus Asphalt oder anderen Straßenbau-Materialien, beispielsweise Beton. Beschicker dienen dazu, Straßenfertiger mit Straßenbaumaterialien zu versorgen. Lastkraftwagen oder andere Transportmittel laden das Straßenbaumaterial entweder direkt in einen Vorratsbehälter des Straßenfertigers oder in einen Vorratsbehälter des Beschickers, der es dann zum Straßenfertiger weitertransportiert.

Das Straßenbaumaterial wird während der Fortbewegung des selbstfahrenden Straßenfertigers oder Beschickers vom Transportfahrzeug in den Vorratsbehälter des Straßenfertigers oder des Beschickers gekippt. Dabei schiebt der Straßenfertiger oder der Beschicker den Lastkraftwagen vor sich her. Dazu weisen Straßenfertiger und Beschicker an ihren in Arbeitsfahrtrichtung vornliegenden Enden Schubrollen auf. Die Schubrollen sind vorzugsweise vor dem jeweiligen Vorratsbehälter angeordnet, und zwar so, dass sie während des Vorschiebens des Lastkraftwagens mittels des Straßenfertigers oder Beschickers an den Hinterreifen des Lastkraftwagens anliegen.

Als problematisch hat sich in der Praxis der sogenannte Andockvorgang des Lastkraftwagens an den Straßenfertiger oder den Beschicker erwiesen. Hierbei fährt der Lastkraftwagen rückwärts auf den Straßenfertiger oder den Beschicker zu, bis seine Hinterreifen zur Anlage an den Schubrollen vor dem Straßenfertiger oder Beschicker kommen. Bei diesem Andockvorgang kommt es immer wieder vor, dass der Lastkraftwagen mit zu großer Geschwindigkeit gegen die Schubrollen fährt. Das kann zu Schäden am Straßenfertiger oder Beschicker führen. Bei Straßenfertigern treten weitere Probleme auf, wenn der Lastkraftwagen zu schnell gegen die Schubrollen fährt, wenn beim Andockvorgang der in Arbeitsfahrtrichtung weiter vorwärtsfahrende Straßenfertiger in seiner Geschwindigkeit verlangsamt oder in ungünstigen Fällen sogar zurückgeschoben wird. In solchen Fällen kommt es beim Andockvorgang zu einer "Delle" im herzustellenden Straßenbelag. Außerdem kommt es auch vor, dass der Fahrer des Lastkraftwagens die Bremse betätigt, wodurch der Straßenfertiger den Lastkraftwagen nicht mehr vorwärtsschieben kann und demzufolge zum Stillstand kommt. Auch das hat Unebenheiten im frisch hergestellten und noch nicht genügend harten Straßenbelag zur Folge.

Aus der CN 2 806 554 Y ist ein Straßenfertiger mit Schubrollen bekannt. Den Schubrollen sind Schraubenfedern zugeordnet. Diese Schraubenfedern dienen zum Abdämpfen der beim Andocken eines Lastkraftwagens auf den Straßenfertiger ausgeübten Kräfte. Die Schraubenfedern sind aber nicht geeignet, die beim Andocken auf die Schubrollen übertragene Energie abzubauen. Deswegen können die den Schubrollen zugeordneten Schraubenfedern nicht verhindern, dass es beim Andocken zu Dellen im frischen Straßenbelag kommt.

Aus der US 2 646 287 A ist eine Anhängevorrichtung bekannt, die ein Kissen aus einem Paket dünner Platten aus einem Elastomermaterial aufweist. Dieses Kissen soll schockabsorbierend sein. Es ist aber nicht geeignet, die beim Andockvorgang an den Straßenfertiger auftretenden Kräfte so weit abzubauen, dass negative Einflüsse auf den vom Straßenfertiger neu hergestellten Straßenbelag verhindert werden.

Ausgehend vom Vorstehenden liegt der Erfindung die Aufgabe zugrunde, eine Baumaschine, insbesondere einen Straßenfertiger oder einen Beschicker, zu schaffen, womit die von einem Lastkraftwagen oder dergleichen beim Andockvorgang auf die Baumaschine ausgeübten Kräfte besser beherrschbar sind.

Eine Baumaschine zur Lösung dieser Aufgabe weist die Merkmale des Anspruchs 1 auf. Dadurch, dass die Dämpfungsmittel der Schubrollen sogenannte Strukturdämpfer aus im Wesentlichen einem Elastomer oder einer Elastomermischung aufweisen, kommt es zu einer wirksameren Dämpfung und insbesondere einem teilweisen Abbau der beim Andockvorgang auf die Schubrollen ausgeübten Kräfte. Die Strukturdämpfer stellen so Etastomerfedern dar. Die Strukturdämpfer weisen aufgrund ihres Elastomermaterials eine besonders vorteilhafte Dämpfungscharakteristik auf, die sich zum Abfedern und teilweisen Absorbieren der beim Andocken auftretenden Kräfte besser eignet als bisher verwendete Dämpfungsmittel.

Bevorzugt ist es vorgesehen, dass der mindestens eine Strukturdämpfer des jeweiligen Dämpfungsmittels eine degressive Kennlinie, insbesondere eine degressive Federkennlinie, aufweist. Demzufolge nimmt die Kraft, die erforderlich ist, um den Strukturdämpfer zusammenzudrücken, mit fortschreitender Einfederung zu. Vorzugsweise ist auch vorgesehen, dass die vom Strukturdämpfer nicht abgebaute Energie, nämlich die Rück stellenergie, mit zunehmender Einfederung überproportional zunimmt. Dieses degressive Verhalten macht Strukturdämpfer für die Abfederung und teilweise Absorption der beim Andockvorgang an Baumaschinen, und zwar vor allem Straßenfertiger und Beschicker, auftretenden Kräfte besonders geeignet. Zunächst werden die vom Lastkraftwagen auf die Schubrollen ausgeübten Kräfte weich abgefedert. Anschließend wirken die Strukturdämpfer den beim Andockvorgang auftretenden Kräften stärker entgegen, so dass auch größere Kräfte zuverlässig abgefedert werden, ohne dass es zu einem Blocken der Strukturdämpfer kommt.

Gemäß einer besonders vorteilhaften Weiterbildung der Erfindung verfügt jedes Dämpfungsmittel über mehrere hintereinanderliegende Strukturdämpfer. Vorzugsweise unterscheiden sich die aufeinanderfolgenden Strukturdämpfer voneinander. Es können so zwei oder auch mehrere unterschiedliche Strukturdämpfer hintereinander oder aufeinanderfolgend angeordnet sein. Auf diese Weise kommt es zu einer Art Reihenschaltung der hintereinanderliegenden Strukturdämpfer, wobei durch die unterschiedlichen Strukturdämpfer den besonderen Anforderungen gerecht werdende Kennlinien, insbesondere stark degressive Kennlinien, der Dämpfungsmittel realisierbar sind, wodurch die Dämpfungsmittel nach anfänglichem weichen Einfedern mit zunehmendem Federweg härter werden. Auch das Absorptionsvermögen der in die Strukturdämpfer eingeleiteten Kräfte lässt sich durch die Aneinanderreihung mehrerer unterschiedlicher Strukturdämpfer individuell an die insbesondere bei Straßenfertigern und Beschickern vorherrschenden Verhältnisse anpassen.

Es sind besondere Ausgestaltungen der Erfindung denkbar, bei denen die unterschiedlichen hintereinander angeordneten Strukturdämpfer jedes Dämpfungsmittels voneinander abweichende Kennlinien, insbesondere unterschiedliche Federkennlinien, aufweisen. Auch können alternativ oder zusätzlich die unterschiedlichen Strukturdämpfer verschiedene Energieabsorptionsraten aufweisen. Durch die genannten möglichen Ausgestaltungen und Bemessungen bzw. Dimensionierungen der Strukturdämpfer lassen sich auch Dämpfungsmittel bilden, die hinsichtlich ihrer Eigenschaften speziell an die beim Andockvorgang an einer Baumaschine auftretenden Anforderungen abgestimmt werden.

Eine vorteilhafte Weiterbildung der Erfindung sieht es vor, mindestens einen Strukturdämpfer jedes Dämpfungsmittels mit einer Führung am Fahrwerk oder einer die Schubrollen tragenden Schubrollentraverse zu befestigen. Die Führung hält die Strukturdämpfer in der vorgesehenen Position zwischen dem Fahrwerk und der Schubrollentraverse. Jede Führung ist so ausgebildet, dass sie mindestens einen Strukturdämpfer des jeweiligen Dämpfungsmittels über den gesamten Einfederungsweg zuverlässig am Fahrwerk oder an der Schubrollentraverse hält und führt. Die Führung erfolgt insbesondere derart, dass die Strukturdämpfer in Längsrichtung, bevorzugt entlang ihrer Längsmittelachse, mit der aufzunehmenden und teilweise zu absorbierenden Kraft, die beim Andockvorgang entsteht, belastet werden.

Eine besonders vorteilhaft ausgestaltete Führung weist einen sich durch den betreffenden Strukturdämpfer verlaufenden Bolzen auf. Dieser Bolzen erstreckt sich mit einem freien Ende durch eine Stirnfläche des Strukturdämpfers, so dass ein freier Endbereich des Bolzens gegenüber dieser Stirnfläche vorsteht. Am gegenüberliegenden Ende weist der Bolzen eine Platte oder einen flachen, plattenartigen Kopf auf. Die Platte oder der Kopf stützen sich an der gegenüberliegenden Stirnfläche des Strukturdämpfers außenseitig ab. Vorzugsweise sind die Platte oder der Kopf so groß ausgebildet, dass sie an der gesamten Stirnfläche des Strukturdämpfers anliegen. Beim Einfedern des Strukturdämpfers kann sich das aus demselben herausragende freie Ende des als Führung dienenden Bolzens weiter aus dem Strukturdämpfer herausbewegen, ohne die Federeigenschaften des Strukturdämpfers zu beeinflussen. Der großflächige Kopf oder die Platte am anderen Ende des Bolzens dienen zur Einleitung der beim Andockvorgang auf den Strukturdämpfer ausgeübten Kraft. Dabei sorgt die Platte oder der Kopf insbesondere dann, wenn er vollflächig auf der Stirnfläche des Strukturdämpfers anliegt, für eine gleichmäßige Einleitung der zu dämpfenden Kraft in den Strukturdämpfer bzw. das Dämpfungsmittel.

Vorzugsweise ist bei aus zwei hintereinanderliegenden Strukturdämpfern gebildeten Dämpfungsmitteln vorgesehen, dass die Führung nur einem vorzugsweise ersten Strukturdämpfer zugeordnet ist, während der zweite (kleinere) Strukturdämpfer des jeweiligen Dämpfungsmittels mit der Führung nur verbunden ist. Diese Verbindung kann auf verschiedene Weise erfolgen, im einfachsten Falle durch eine Schraube. Durch das Befestigen des zweiten Strukturdämpfers vor dem mit der Führung versehenen ersten Strukturdämpfer kann der zweite Strukturdämpfer vom ersten Strukturdämpfer geführt werden ohne eine eigene zusätzliche Führung zu benötigen.

Bevorzugt ist der zweite Strukturdämpfer durch insbesondere eine innenliegende Schraube mit der Führung, vorzugsweise der Platte, des ersten Strukturdämpfers verschraubt. Das stellt eine sehr einfache Verbindung der Strukturdämpfer dar. Gleichzeitig erfolgt durch die Führung eine zuverlässige Verbindung bzw. Aneinanderkopplung beider Strukturdämpfer des jeweiligen Dämpfungsmittels.

Bei einer bevorzugt ausgebildeten Baumaschine ist vorgesehen, die Schubrollentraverse um eine die Längsmittelachse des Fahrwerks senkrecht schneidende Schwenkachse verschwenkbar auszubilden. Alternativ oder zusätzlich ist vorgesehen, dass die Schubrollentraverse auf der Längsmittelachse verschiebbar ist. Dadurch sind die Schubrollen gegebenenfalls mehrachsig bewegbar. Von der Schubrollenlagerung sind diese Bewegungen in die Dämpfungsmittel einleitbar. Gleichzeitig können die Dämpfungsmittel mit ihrer nicht abgebauten Restenergie vom Andockvorgang die Schubrollen mit der Schubrollentraverse in ihre Ausgangslage zurückbringen, nachdem der Andockvorgang beendet ist.

Ein bevorzugtes Ausführungsbeispiel der Erfindung wird nachfolgend anhand der Zeichnung näher erläutert. In dieser zeigen:
- Fig. 1: eine schematische Seitenansicht eines Straßenfertigers,

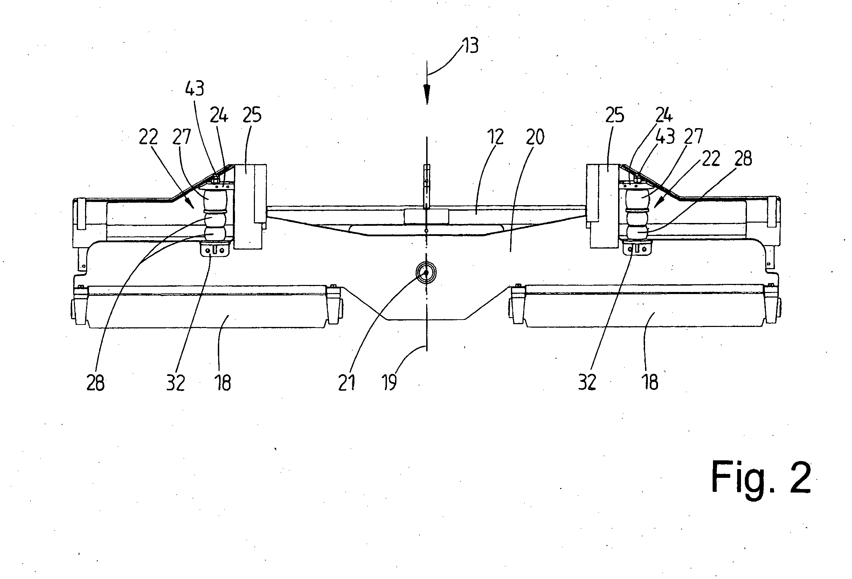

- Fig. 2: eine Draufsicht auf einen vorderen Teil des Straßenfertigers mit Schubrollen, einer Schubrollentraverse und zwei Dämpfungsmitteln,
- Fig. 3: eine vergrößerte Einzelheit III aus der Fig. 1 im Bereich der Schubrollenlagerung,
- Fig. 4: ein die Kennlinien der Dämpfungsmittel veranschaulichendes Diagramm mit der Dämpferhöhe in Abhängigkeit von der Kraft,
- Fig. 5: eine Seitenansicht eines unbelasteten Dämpfungsmittels,
- Fig. 6: einen Längsschnitt durch das unbelastete Dämpfungsmittel der Fig. 5,
- Fig. 7: eine Seitenansicht des maximal eingefederten Dämpfungsmittels, und
- Fig. 8: eine Führung des Dämpfungsmittels.

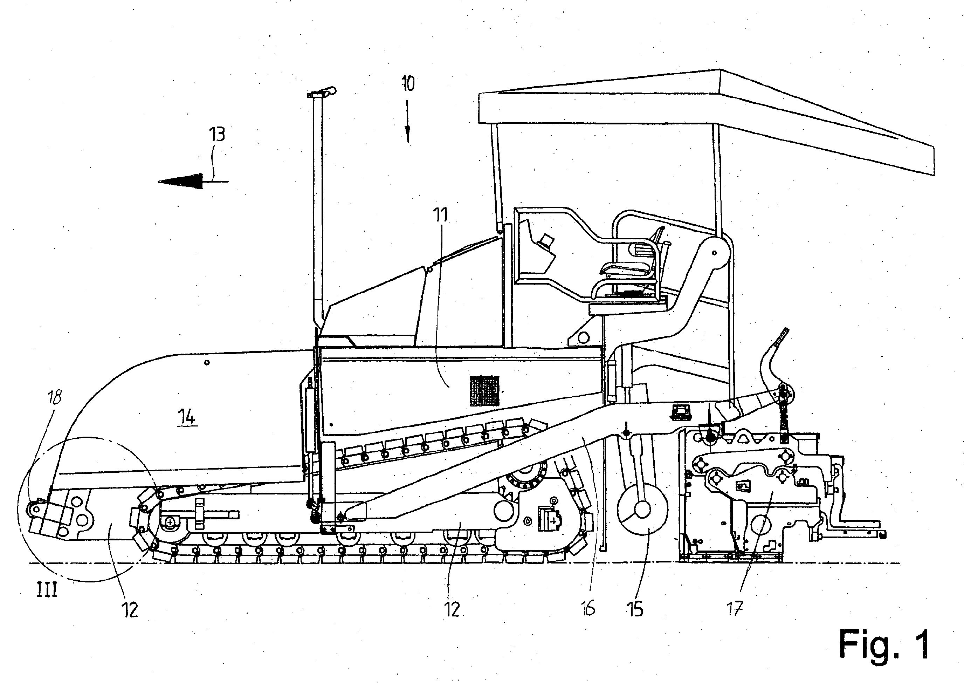

Die Figuren zeigen eine als Straßenfertiger 10 ausgebildete Baumaschine. Der in der Fig. 1 schematisch dargestellte Straßenfertiger 10 dient zur Herstellung von Straßenbelägen. Dabei kann es sich um Straßenbeläge jeder Art, insbesondere aus verschiedenen Materialien wie zum Beispiel Asphalt oder Beton, handeln.

Der Straßenfertiger 10 ist selbstfahrend ausgebildet. Dazu verfügt er über eine zentrale Antriebseinheit 11. Die zentrale Antriebseinheit 11 weist üblicherweise einen Verbrennungsmotor auf, der Hydraulikpumpen zur Versorgung von Hydraulikmotoren und gegebenenfalls mindestens einen Generator zur Erzeugung elektrischer Energie antreibt.

Der Straßenfertiger 10 verfügt über ein Fahrwerk 12, das im gezeigten Ausführungsbeispiel als ein Raupenfahrwerk ausgebildet ist. Das Fahrwerk 12 des Straßenfertigers 10 kann aber auch ein Radfahrwerk sein. Das Fahrwerk 12 wird von der Antriebseinheit 11 derart angetrieben, dass der Straßenfertiger in Arbeitsfahrtrichtung 13 vorwärtsfahrbar oder auch in entgegengesetzter Richtung zurückbewegbar ist.

In Arbeitsfahrtrichtung 13 gesehen ist vor der Antriebseinheit 11 ein wannen- bzw. muldenartig ausgebildeter Vorratsbehälter 14 angeordnet. Der Vorratsbehälter 14 nimmt einen Vorrat des zur Herstellung des Straßenbelags dienenden Materials, beispielsweise Asphalt oder Beton, auf. Gegebenenfalls kann der Straßenfertiger 10 auch noch mindestens einen weiteren in der Fig. 1 nicht gezeigten Vorratsbehälter aufweisen.

Durch nicht gezeigte Förderorgane, beispielsweise einen sogenannten Kratzerförderer, wird das Straßenbaumaterial vom Vorratsbehälter 14 unter der Antriebseinheit 11 hindurch zum in Arbeitsfahrtrichtung 13 hinteren Ende des Straßenfertigers 10 transportiert. Von einer hinter dem Fahrwerk 12 angeordneten Verteilerschnecke 15 wird das Straßenbaumaterial über die gesamte Arbeitsbreite des Straßenfertigers 10 verteilt. Dabei gelangt ein Vorrat des Straßenbaumaterials vor eine hinter der Verteilerschnecke 15 an auf- und abbewegbaren Tragarmen 16 am Fahrwerk 12 angehängten Einbaubohle 17. Die Einbaubohle 17 und die Verteilerschnecke 15 können sowohl breitenunveränderlich als auch breitenveränderlich sein. Im letztgenannten Falle verfügt der Straßenfertiger 10 über eine veränderbare Arbeitsbreite.

Das Straßenbaumaterial wird dem Vorratsbehälter 14 aus einem in den Figuren nicht dargestellten Lastkraftwagen zugeführt. Das Straßenbaumaterial wird vom Lastkraftwagen in den Vorratsbehälter 14 gekippt. Die dabei stattfindende Übergabe des Straßenbaumaterials vom Lastkraftwagen zum Vorratsbehälter 14 findet während des Betriebs des Straßenfertigers 14, nämlich während der Vorwärtsfahrt desselben in Arbeitsfahrtrichtung 13, statt. Dazu wird der Lastkraftwagen während des Abkippens des Straßenbaumaterials in den Vorratsbehälter 14 vom Straßenfertiger 10 in Arbeitsfahrtrichtung 13 weitergeschoben. Der Straßenfertiger 10 schiebt dabei den Lastkraftwagen während der Übergabe des Straßenbaumaterials vor sich her.

Ermöglicht wird das Weiterschieben des Lastkraftwagens durch den Straßenfertiger 10 durch vor demselben angeordnete Schubrollen 18. Im gezeigten Ausführungsbeispiel verfügt der Straßenfertiger 10 über zwei gleich ausgebildete, frei drehbare Schubrollen 18, die sich auf gegenüberliegenden Seiten des Lastkraftwagens hinter seinen Hinterrädern während des Weiterschiebens des Lastkraftwagens vom Straßenfertiger 10 abstützen. Jeweils eine Schubrolle 18 tritt dabei in Kontakt mit einem Hinterreifen bzw. einem Hinterreifenpaar des Lastkraftwagens. Dementsprechend verfügt jede Schubrolle 18 über eine Breite, die mindestens der Breite des Hinterreifens oder Hinterreifenpaars des Lastkraftwagens entspricht.

Beide Schubrollen 18 liegen auf einer gemeinsamen, horizontalen Schubrollenachse, die quer oder leicht quer zur in Arbeitsfahrtrichtung 13 verlaufenden Längsmittelachse 19 des Straßenfertigers 10, insbesondere seines Fahrwerks 12, verläuft.

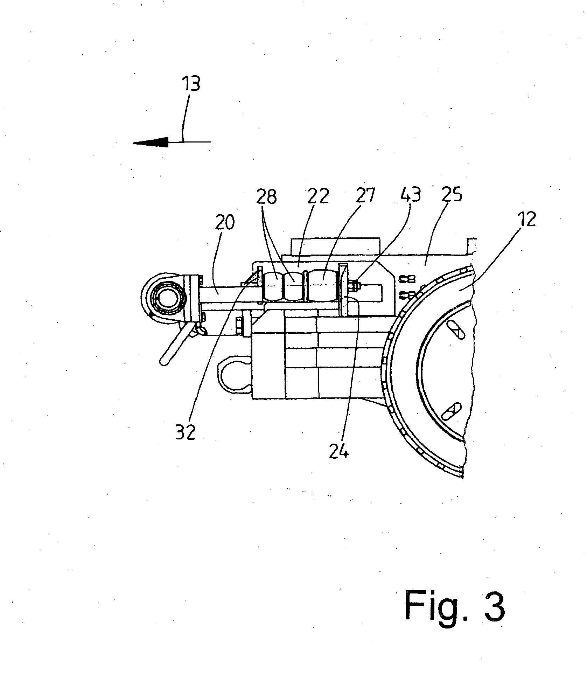

Die beiden vor einer Achse liegenden Schubrollen 18 sind frei drehbar vor einer Schubrollentraverse 20 gelagert, und zwar an gegenüberliegenden Rand- bzw. Endbereichen derselben. Die Schubrollentraverse 20 ist beweglich an der Vorderseite des Fahrwerks 12 gelagert. Diese Lagerung ist derart, dass die Schubrollen 18 sich freiliegend vor dem Fahrwerk 12 befinden (Fig. 3). Beim gezeigten Ausführungsbeispiel ist die Schubrollentraverse 20 in mehrfacher Hinsicht beweglich vor dem Fahrwerk 12 befestigt. Einerseits ist die Schubrollentraverse 20 um eine vertikale Drehachse 21 verschwenkbar, die die Längsmittelachse 19 des Fahrwerks 12 rechtwinklig oder nahezu rechtwinklig schneidet. Zum anderen ist die Schubrollentraverse 20 auf der Längsmittelachse 19 verschiebbar. Dadurch ist die Schubrollentraverse 20 mit den daran frei drehbar gelagerten Schubrollen 18 gegen die Arbeitsfahrtrichtung 13 verschiebbar und in Arbeitsfahrtrichtung 13 zurückbewegbar. Diese Lateralbewegung der Schubrollentraverse 20 auf der horizontälen Längsmittelachse 19 erfolgt mit mindestens einer Führung. Beispielsweise kann dazu die Drehachse 21 an einem bewegbaren Schlitten angeordnet sein, der in Schienen oder anderen Führungen an der Vorderseite des Fahrwerks 12 in Richtung der Längsmittelachse 19 gegensinnig frei verschiebbar ist.

Die Schubrollentraverse 20 mit den beiden Schubrollen 18 ist elastisch bzw. federnd beweglich vor dem Fahrwerk 12 angeordnet. Dazu sind im gezeigten Ausführungsbeispiel zwei gleiche Dämpfungsmittel 22 vorgesehen. Die beiden Dämpfungsmittel 22 sind auf gegenüberliegenden Seiten der Längsmittelachse 19 angeordnet, und zwar symmetrisch, das heißt mit jeweils gleichem Abstand zur Längsmittelachse 19. Die Dämpfungsmittel 22 sind am Fahrwerk 12 des Straßenfertigers 10 gehalten und geführt. Dazu stützt sich jedes Dämpfungsmittel 22 an einer Stützfläche 23 eines quer zur Längsmittelachse 19 verlaufenden Tragarms 24 ab. Jeder Tragarm 24 ist fest an der Außenseite einer Längstraverse 25 des Fahrwerks 12 befestigt. Eine jedem Dämpfungsmittel 22 zugeordnete Führung 26 stellt sicher, dass die Dämpfungsmittel 22 ihre etwa horizontale und parallel zur Längsmittelachse 19 verlaufende Ausrichtung beibehalten. Die jeweilige Führung 26 ist so ausgebildet, dass sie eine Kompression, nämlich eine Verkürzung der Länge des jeweiligen Dämpfungsmittels 22 und eine Rückgängigmachung der Kompression zulässt.

Jedes der beiden gleich ausgebildeten Dämpfungsmittel 22 wird gebildet von mindestens einem Strukturdämpfer aus einem Elastomer oder einer Elastomermischung (beispielsweise Gummi, Polyurethan oder dergleichen). Im gezeigten Ausführungsbeispiel verfügt jedes Dämpfungsmittel 22 über zwei unterschiedliche Strukturdämpfer 27, 28. Denkbar ist es auch, jedes Dämpfungsmittel 22 aus mehr als zwei Strukturdämpfern, beispielsweise drei Strukturdämpfern, zu bilden. Bei drei Strukturdämpfern können zwei Strukturdämpfer gleich ausgebildet sein.

Die Strukturdämpfer 27, 28 sind in Arbeitsfahrtrichtung 13 gesehen hintereinander angeordnet, wobei ihre Längsmittelachsen auf einer gemeinsamen Mittelachse 29 liegen. Jede Mittelachse 29 verläuft parallel zur Längsmittelachse 19 des Straßenfertigers 10 und annähernd horizontal. Im gezeigten Ausführungsbeispiel (Fig. 3) verlaufen die Mittelachsen 29 der Strukturdämpfer 27, 28 in Arbeitsfahrtrichtung 13 gegenüber der Horizontalen leicht abfallend, und zwar um ca. 2° bis 6°, insbesondere 4°.

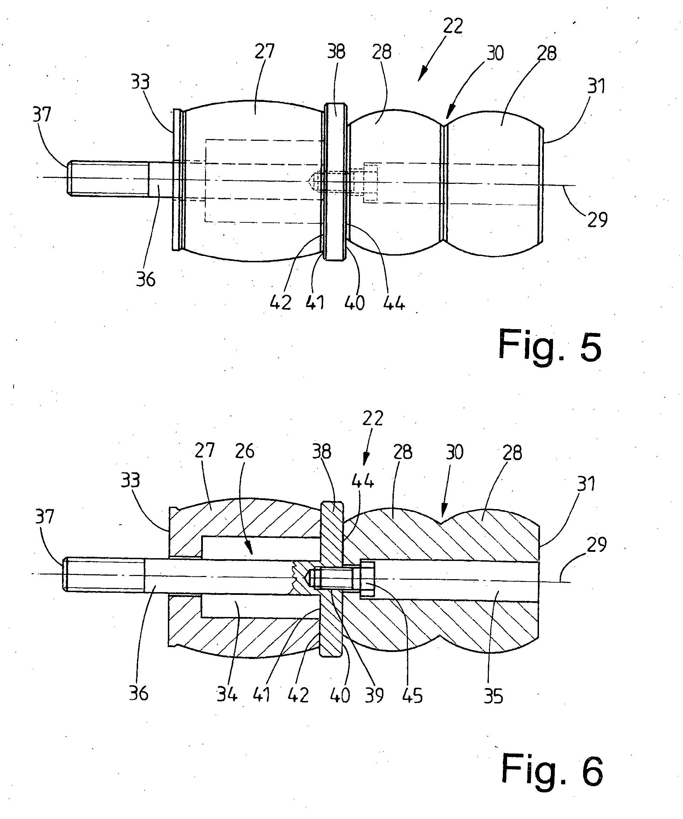

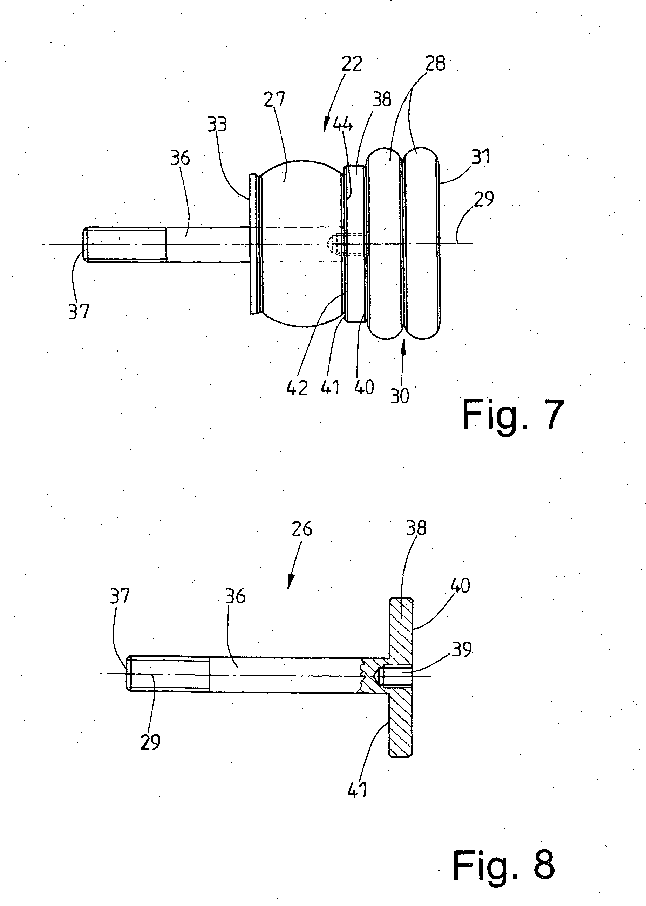

Der in Arbeitsfahrtrichtung 13 vordere Strukturdämpfer 28 ist länger, aber im Maximaldurchmesser kleiner ausgebildet als der in Arbeitsfahrtrichtung 13 hintenliegende Strukturdämpfer 27. Beide Strukturdämpfer 27, 28 verfügen über runde, ballige äußere Mantelflächen. Jedoch ist die Mantelfläche des vorderen Strukturdämpfers 28 mit einer etwa mittigen Einschnürung 30 versehen (Fig. 6). Beidseitig dieser etwa mittigen Einschnürung 30 befinden sich kreisförmige, ballige Außenmantelabschnitte. Dadurch wirkt beim Einfedern der vordere Strukturdämpfer 28 wie zwei zusammenhängende Strukturdämpfer (Fig. 7).

Eine in Arbeitsfahrtrichtung 13 vornliegende Stirnfläche 31 des vorderen Strukturdämpfers 28 stützt sich an einem rückseitigen Anschlagwinkel 32 der Schubrollentraverse 20 ab. Der Anschlagwinkel 32 ist aber so bemessen, dass er eine vollflächige Anlage für die gesamte Stirnfläche 31 des vorderen Strukturdämpfers 28 bildet. Eine in Arbeitsfahrtrichtung 13 hintenliegende Stirnfläche 33 des hinteren Strukturdämpfers 27 ist vollflächig abgestützt an der Stützfläche 23 des Tragarms 24 im vorderen Bereich des Fahrwerks 12 des Straßenfertigers 10. Jeder Strukturdämpfer 27, 28 ist mit einer Durchgangsbohrung 34, 35 versehen. Jede der unterschiedlich großen Durchgangsbohrungen 34 und 35 ist abgestuft. Die Durchgangsbohrung 34 im hinteren Strukturdämpfer 27 verfügt über einen Großteil der Länge des Strukturdämpfers 27 über einen größeren Durchmesser. Der kürzere, kleinere Durchmesser der Durchgangsbohrungen 34 geht aus von der Stirnfläche 33 des hinteren Strukturdämpfers 27. Der größere Durchmesser der Durchgangsbohrung 35 im vorderen Strukturdämpfer 28 geht von seiner Stirnfläche 31 aus. Auch beim Strukturdämpfer 28 erstreckt sich der größere Durchmesser der Durchgangsbohrung 35 über einen Großteil der Länge (Fig. 6).

Durch den hinteren Strukturdämpfer 27 erstreckt sich die Führung 26. Die Führung 26 weist einen länglichen Bolzen 36 mit einem Außengewinde am freien Ende 37 und einem großflächigen, plattenartigen Bolzenkopf 38 am dem freien Ende 37 gegenüberliegenden Ende auf (Fig. 8). Der Bolzen 36 und der Bolzenkopf 38 sind im gezeigten Ausführungsbeispiel einstückig miteinander verbunden. Es ist aber auch denkbar, den Bolzen 36 oder den Bolzenkopf 38 mehrstückig auszubilden und diese anschließend zu verbinden, beispielsweise durch Schweißen. Die Führung 26 weist im Bolzenkopf 38 eine Gewindesackbohrung 39 auf. Die Gewindesackbohrung 39 geht aus von einer außenliegenden Stirnfläche 40 des Bolzenkopfs 38.

Die Führung 26 ist dem hinteren Strukturdämpfer 27 so zugeordnet, dass sich eine Unterseite 41 des Bolzenkopfs 38 vollflächig an einer zum vorderen Strukturdämpfer 28 weisenden Stirnfläche 42 des hinteren Strukturdämpfers 27 abstützt. Der Bolzen 36 erstreckt sich dann durch die gesamte Durchgangsbohrung 34 im hinteren Strukturdämpfer 27. Die Länge des Bolzens 36 ist so bemessen, dass dieser auch bei unbelastetem Strukturdämpfer 27 mit einem vom freien Ende 37 ausgehenden Endbereich gegenüber der Stirnfläche 33 aus dem Strukturdämpfer 27 herausragt. Dieser vorstehende vordere Abschnitt des Bolzens 36 ist durch eine Durchgangsbohrung im Tragarm 24 am Fahrwerk 12 hindurchgeführt und durch zwei gekonterte Muttern 43 auf der dem Strukturdämpfer 27 gegenüberliegenden Seite des Tragarms 24 gegen Herausrutschen aus dem Tragarm 24 gesichert. Beim Zusammendrücken des Strukturdämpfers 27 bewegt sich der Bolzen 36 in Längsrichtung durch die Durchgangsbohrung 34 im Strukturdämpfer 27 und die Durchgangsbohrungen im Tragarm 24, wobei die gekonterten Muttern 43 sich vom Tragarm 24 wegbewegen. Die Führung 26 ist so bemessen, dass dann, wenn die Strukturdämpfer 27 und 28 unbelastet sind, also wenn das jeweilige Dämpfungsmittel 22 von der Schubrollentraverse 20 mit Schubrollen 18 nicht zusammengedrückt wird, die gekonterten Muttern 43 von der dem Strukturdämpfer 27 gegenüberliegenden Seite am Rand der Bohrung im Tragarm 24 anschlagen und somit eine Begrenzung bilden. Dabei ist die Begrenzung so eingestellt, dass der Bolzen 36 mit dem Bolzenkopf 38 als Anschlag dienen und bei unbelastetem Strukturdämpfer 27 eine geringe Einfederung durch eine Vorspannung des Strukturdämpfers 27 aufrechterhalten.

Der vordere Strukturdämpfer 28 ist mit einer zum Strukturdämpfer 27 weisenden Stirnseite 44 vor der vom Bolzen 36 weggerichteten Seite des plattenartigen Bolzenkopfs 38 befestigt. Im gezeigten Ausführungsbeispiel erfolgt diese Befestigung lediglich durch eine Schraube 45, die von der Stirnfläche 31 her in die Durchgangsbohrung 35 im vorderen Strukturdämpfer 28 eingesetzt ist und mit ihrem Gewinde in der Gewindesackbohrung 39 in der Führung 26, insbesondere dem Bolzenkopf 38, festgeschraubt ist (Fig. 6). Dadurch wird der vor dem Strukturdämpfer 27 festgeschraubte Strukturdämpfer 28 vom hinteren Strukturdämpfer 27 mitbewegt, wobei eine Führung des vorderen Strukturdämpfers 28 über die sich durch den hinteren Strukturdämpfer 27 erstreckende Führung 26 erfolgt.

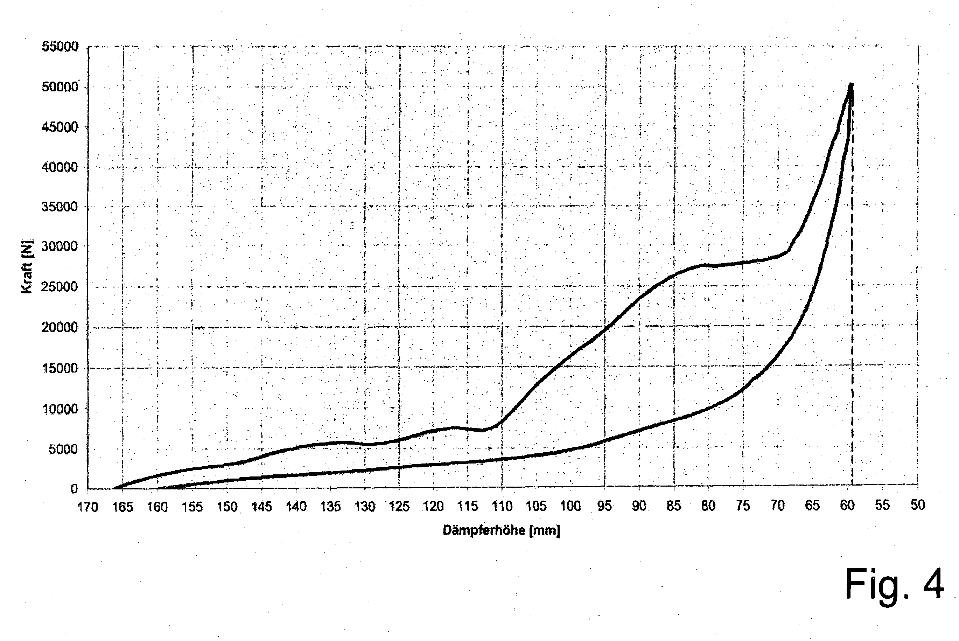

Die Eigenschaften und Kennlinien der von den Strukturdämpfern gebildeten Dämpfungsmitteln 22 ergeben sich aus der Darstellung der Fig. 4. Demnach sind die Federkennlinien bzw. Federraten der aus den Strukturdämpfern 27 und 28 zusammengesetzten Dämpfungsmittel 22 degressiv. Folglich nimmt die Härte der Dämpfungsmittel 22 mit zunehmender Einfederung zu.

Die Fig. 4 lässt auch erkennen, dass die obere Kennlinie, die die Kraft und den Weg beim Zusammendrücken beider Dämpfungsmittel 22 aus jeweils zwei aufeinanderfolgenden Strukturdämpfern 27, 28 darstellt, größer ist als die Rückstellenergie, die die Strukturdämpfer 27, 28 aufbringen, wenn sie selbsttätig in den im Wesentlichen unbelasteten Zustand zurückkehren. Dadurch, dass die Rückstellenergie geringer ist als die Einfederungsenergie, erfolgt eine Absorption eines Teils der aufgenommenen Energie durch die Strukturdämpfer 27, 28. Besonders deutlich wird aus der Darstellung der Fig. 4, dass die Paarung der Strukturdämpfer 27, 28 zur Bildung jedes Dämpfungsmittels 22 so gewählt ist, dass zunächst ein weiches Einfedern erfolgt, aber wenig Energieabsorption und anschließend die Einfederung zunehmend härter wird und dabei mehr Energie absorbiert wird. Es kommt somit zu einer allmählichen und immer größer werdenden Dämpfung und teilweisen Vernichtung der beim Andockvorgang auftretenden Kräfte, wobei die nicht absorbierte Energie als Rückstellenergie mit zunehmender Rückgänigmachung der Einfederung der Strukturdämpfer 27, 28 kleiner wird und dadurch der Kompressionshub der Strukturdämpfer 27, 28 allmählich rückgängig gemacht wird, das heißt die Strukturdämpfer 27, 28 sich mit abnehmender Rückstellkraft ausdehnen.

Die in der Fig. 4 gezeigten Kennlinien führen dazu, dass die Andockkräfte beim Straßenfertiger 10 aufgrund der Bildung der Dämpfungsmittel 22 aus verschiedenen aufeinanderfolgenden Strukturdämpfern 27, 28 weich aufgefangen werden, ein Großteil der dabei in die Strukturdämpfer 27, 28 eingeleiteten Energie von denselben absorbiert wird und sich die Strukturdämpfer 27, 28 allmählich und gleichmäßig wieder in ihre Ausgangsstellung zurückbewegen. Dadurch kommen selbst bei "harten" Andockvorgängen keine unerwünschten Bewegungen, insbesondere kein unerwünschtes Abbremsen oder gar ein Zurückbewegen des Straßenfertigers 10 vor.

**Bezugszeichenliste:**

| | | | |
|---|---|---|---|
| 10 | Straßenfertiger | 36 | Bolzen |
| 11 | Antriebseinheit | 37 | freies Ende |
| 12 | Fahrwerk | 38 | Bolzenkopf |
| 13 | Arbeitsfahrtrichtung | 39 | Gewindesackbohrung |
| 14 | Vorratsbehälter | 40 | Stirnfläche |
| 15 | Verteilerschnecke | 41 | Unterseite |
| 16 | Tragarm | 42 | Stirnfläche |
| 17 | Einbaubohle | 43 | Mutter |
| 18 | Schubrolle | 44 | Stirnseite |
| 19 | Längsmittelachse | 45 | Schraube |
| 20 | Schubrollentraverse | | |
| 21 | Drehachse | | |
| 22 | Dämpfungsmittel | | |
| 23 | Stützfläche | | |
| 24 | Tragarm | | |
| 25 | Längstraverse | | |
| 26 | Führung | | |
| 27 | Strukturdämpfer (hinten) | | |
| 28 | Strukturdämpfer (vorne) | | |
| 29 | Mittelachse | | |
| 30 | Einschnürung | | |
| 31 | Stirnfläche | | |
| 32 | Anschlagwinkel | | |
| 33 | Stirnfläche | | |
| 34 | Durchgangsbohrung | | |
| 35 | Durchgangsbohrung | | |

## Patentansprüche

1. Baumaschine, insbesondere Straßenfertiger oder Beschicker, mit einem antreibbaren Fahrwerk (12), mindestens einem auf dem Fahrwerk (12) angeordneten Vorratsbehälter (14) für Straßenbaumaterial und mit in Arbeitsfahrtrichtung (13) gesehen vor dem Vorratsbehälter (14) angeordneten Schubrollen (18), denen Dämpfungsmittel (22) zugeordnet sind, **dadurch gekennzeichnet, dass** die Dämpfungsmittel (22) jeweils mindestens einen Strukturdämpfer (27, 28) aus im Wesentlichen Elastomer aufweisen.

2. Baumaschine nach Anspruch 1, **dadurch gekennzeichnet, dass** der mindestens eine Strukturdämpfer (27, 28) des jeweiligen Dämpfungsmittels (22) über eine degressive Kennlinie verfügt, insbesondere eine degressive Feder- und/oder Dämpfungskennlinie.

3. Baumaschine nach Anspruch 1 oder 2, **dadurch gekennzeichnet, dass** die Dämpfungsmittel (22) jeweils mehrere hintereinanderliegenden Strukturdämpfer (27, 28), vorzugsweise mindestens zwei unterschiedliche Strukturdämpfer (27, 28), aufweisen.

4. Baumaschine nach einem der vorhergehenden Ansprüche, **dadurch gekennzeichnet, dass** die unterschiedlichen Strukturdämpfer (27, 28) verschiedene Größen, insbesondere verschiedene Abmessungen, aufweisen.

5. Baumaschine nach einem der vorhergehenden Ansprüche, **dadurch gekennzeichnet, dass** mindestens zwei Strukturdämpfer (27, 28) für das jeweilige Dämpfungsmittel (22) vorgesehen sind, welche verschiedene Kennlinien, vorzugsweise unterschiedliche Feder- und/oder Dämpfungskennlinien, aufweisen.

6. Baumaschine nach einem der vorhergehenden Ansprüche, **dadurch gekennzeichnet, dass** mindestens zwei Strukturdämpfer (27, 28) für das jeweilige Dämpfungsmittel (22) vorgesehen sind, welche verschiedene Energieabsorptionsraten aufweisen.

7. Baumaschine nach einem der vorhergehenden Ansprüche, **dadurch gekennzeichnet, dass** zumindest ein Strukturdämpfer (27) jedes Dämpfungsmittels (22) mittels einer Führung (26) am Fahrwerk (12) oder einer Schubrollentraverse (20) befestigt ist.

8. Baumaschine nach Anspruch 7, **dadurch gekennzeichnet, dass** die Führung einen sich durch den betreffenden Strukturdämpfer (27) erstreckenden Bolzen (36) aufweist, der mit einem Ende (37) gegenüber einer Stirnfläche (33) des Strukturdämpfers (27) vorsteht und am gegenüberliegenden Ende einen plattenartigen Bolzenkopf (38) aufweist, der an einer gegenüberliegenden Stirnfläche (42) des Strukturdämpfers (27) außenseitig anliegt.

9. Baumaschine nach einem der Ansprüche 7 oder 8, **dadurch gekennzeichnet, dass** ein vorzugsweise kleinerer, zweiter Strukturdämpfer (28) des jeweiligen Dämpfungsmittels (22) mit der Führung (26) des ersten Strukturdämpfers (27) verbunden ist.

10. Baumaschine nach Anspruch 9, **dadurch gekennzeichnet, dass** der zweite Strukturdämpfer (28) mit der Führung (26) des ersten Strukturdämpfers (27) verschraubt ist, vorzugsweise durch eine innenliegende Schraube.

11. Baumaschine nach einem der Ansprüche 7-10, **dadurch gekennzeichnet, dass** die Schubrollentraverse (20) um eine eine Längsmittelachse (19) des Fahrwerks (12) senkrecht schneidende Dreachse (21) verschwenkbar und/oder auf der Längsmittelachse (19) verschiebbar ist, wobei das Schwenken und/oder Verschieben von den Strukturdämpfern (27, 28) beeinflussbar ist, vorzugsweise die Schubrollentraverse (20) nur von einem Teil der beim Verschwenken und/oder Verschieben der Schubrollentraverse (20) mit den diese tragenden Schubrollen (18) von den Strukturdämpfern (27, 28) aufgenommenen Energie zurückstellbar ist.

## Claims

1. Construction machine, in particular a road paver or feeder, having a driveable running-gear unit (12), at least one supply container (14) for road-building material arranged on the running-gear unit (12), and having pushrollers (18) which, as seen in the working direction of travel (13), are arranged upstream of the supply container (14) and to which damping means (22) are assigned, **characterized in that** the damping means (22) in each case comprise at least one structural damper (27, 28) made substantially of elastomer.

2. Construction machine according to Claim 1, **characterized in that** the at last one structural damper (27, 28) of the respective damping means (22) has a degressive characteristic, in particular a degressive spring and/or damping characteristic.

3. Construction machine according to Claim 1 or 2, **characterized in that** the damping means (22) in each case comprise a plurality of structural dampers (27, 28) situated behind one another, preferably at least two different structural dampers (27, 28).

4. Construction machine according to one of the preceding claims, **characterized in that** the different structural dampers (27, 28) have different sizes, in particular different dimensions.

5. Construction machine according to one of the preceding claims, **characterized in that** at least two structural dampers (27, 28) are provided for the respective damping means (22) and have different characteristics, preferably different spring and/or damping characteristics.

6. Construction machine according to one of the preceding claims, **characterized in that** at least two structural dampers (27, 28) are provided for the respective damping means (22) and have different energy absorption rates.

7. Construction machine according to one of the preceding claims, **characterized in that** at least one structural damper (27) of each damping means (22) is fastened by means of a guide (26) to the running-gear unit (12) or a pushroller crossmember (20).

8. Construction machine according to Claim 7, **characterized in that** the guide comprises a bolt (36) which extends through the respective structural damper (27) and which projects by one end (37) with respect to one end face (33) of the structural damper (27) and has at the opposite end a plate-like bolt head (38) which bears externally on an opposite end face (42) of the structural damper (27).

9. Construction machine according to either of Claims 7 and 8, **characterized in that** a preferably smaller, second structural damper (28) of the respective damping means (22) is connected to the guide (26) of the first structural damper (27).

10. Construction machine according to Claim 9, **characterized in that** the second structural damper (28) is screwed to the guide (26) of the first structural damper (27), preferably by means of an internal screw.

11. Construction machine according to one of Claims 7-10, **characterized in that** the pushroller crossmember (20) can be pivoted about an axis of rotation (21) perpendicularly intersecting a longitudinal centre axis (19) of the running-gear unit (12) and/or can be displaced along the longitudinal centre axis (19), wherein the pivoting movement and/or displacement can be influenced by the structural dampers (27, 28), and, preferably, the pushroller crossmember (20) can be returned only by part of the energy absorbed by the structural dampers (27, 28) during the pivoting movement and/or displacement of the pushroller crossmember (20) with the pushrollers (18) supporting it.

## Revendications

1. Machine de construction, notamment finisseuse de route ou dispositif d'alimentation, avec un châssis (12) pouvant être entraîné, au moins un bac de réserve (14) disposé sur le châssis (12) pour le matériau de construction de route et avec des rouleaux compresseurs (18) disposés devant le bac de réserve (14), dans la direction de travail (13), auxquels sont associés des moyens d'amortissement (22), **caractérisée en ce que** les moyens d'amortissement (22) comportent respectivement au moins un amortisseur structurel (27, 28) composé pour l'essentiel d'élastomère.

2. Machine de construction selon la revendication 1, **caractérisée en ce que** l'au moins un amortisseur structurel (27, 28) du moyen d'amortissement (22) respectif dispose d'une courbe caractéristique dégressive, notamment d'une courbe caractéristique d'amortissement et/ou de ressort dégressive.

3. Machine de construction selon la revendication 1 ou 2, **caractérisée en ce que** les moyens d'amortissement (22) comportent respectivement plusieurs amortisseurs structurels (27, 28) disposés les uns derrière les autres, de préférence au moins deux amortisseurs structurels (27, 28) différents.

4. Machine de construction selon l'une quelconque des revendications précédentes, **caractérisée en ce que** les différents amortisseurs structurels (27, 28) présentent différentes tailles, notamment différentes dimensions.

5. Machine de construction selon l'une quelconque des revendications précédentes, **caractérisée en ce qu'**au moins deux amortisseurs structurels (27, 28) sont prévus pour les moyens d'amortissement (22) respectifs, ceux-ci présentant des courbes caractéristiques différentes, de préférence des courbes caractéristiques d'amortissement et/ou de ressort différentes.

6. Machine de construction selon l'une quelconque des revendications précédentes, **caractérisée en ce qu'**au moins deux amortisseurs structurels (27, 28) sont prévus pour le moyen d'amortissement (22) respectif, lesdits amortisseurs comportant des vitesses d'absorption d'énergie différentes.

7. Machine de construction selon l'une quelconque des revendications précédentes, **caractérisée en ce qu'**au moins un amortisseur structurel (27) de chaque moyen d'amortissement (22) est fixé au châssis (12) ou à une traverse de rouleau compresseur (20) au moyen d'un guide (26).

8. Machine de construction selon la revendication 7, **caractérisée en ce que** le guide comporte un boulon (36) s'étendant à travers l'amortisseur structurel (27) concerné et saillant avec une extrémité (37) par rapport à une surface frontale (33) de l'amortisseur structurel (27) et comportant au niveau de l'extrémité opposée une tête de boulon (38) de type plaque reposant du côté extérieur contre une surface frontale (42) opposée de l'amortisseur structurel (27).

9. Machine de construction selon l'une quelconque des revendications 7 ou 8, **caractérisée en ce qu'**un deuxième amortisseur structurel (28), de préférence plus petit, du moyen d'amortissement (22) respectif est relié au guide (26) du premier amortisseur structurel (27).

10. Machine de construction selon la revendication 9, **caractérisée en ce que** le deuxième amortisseur structurel (28) est vissé au guide (26) du premier amortisseur structurel (27), de préférence par le biais d'une vis intérieure.

11. Machine de construction selon l'une quelconque des revendications 7 à 10, **caractérisée en ce que** la traverse de rouleau compresseur (20) peut pivoter autour d'un axe de rotation (21) coupant perpendiculairement l'axe central longitudinal (19) du châssis (12) et/ou peut être coulissée sur l'axe central longitudinal (19), le pivotement et/ou le coulissement pouvant être influencé par les amortisseurs structurels (27, 28), la traverse de rouleau compresseur (20) ne pouvant de préférence être rappelée que par une partie de l'énergie absorbée par les amortisseurs structurels (27, 28) lors du pivotement et/ou du coulissement de la traverse de rouleau compresseur (20), avec les rouleaux compresseurs (18) la supportant.
